# EUROPEAN PATENT APPLICATION

(11) **EP 3 623 939 A1**
(43) Date of publication of application: **18.03.2020**
(21) Application number: 19191618.8
(22) Date of filing: 14.08.2019
(51) Int. Cl.: G06F 8/65, H04W 4/50

(54) **METHOD AND APPARATUS FOR WIRELESSLY UPDATING SOFTWARE FOR VEHICLE**

(30) Priority: 14.08.2018 KR 20180095180; 07.08.2019 KR 20190095966
(71) Applicant: HYUNDAI MOTOR COMPANY, Seoul 06797 (KR); Kia Motors Corporation, Seoul 06797 (KR)
(72) Inventor: CHO, A Ram, 17064 Gyeonggi-do (KR); LIM, Wha Pyeong, 18271 Gyeonggi-do (KR); PARK, Seung Wook, 16803 Gyeonggi-do (KR)
(74) Representative: Isarpatent

(57) **Abstract**

The present disclosure in some embodiments provides a method and apparatus for efficiently performing in-vehicle software updates wirelessly. According to at least one aspect of the present disclosure, a procedure (or protocol) for wireless software updates and a format of messages that can be used within the procedure are provided.

## Description

### TECHNICAL FIELD

The present disclosure in some embodiments relates to wireless updates of in-vehicle software.

### BACKGROUND

The statements in this section merely provide background information related to the present disclosure and do not necessarily constitute prior art.

Increasingly complex software of electronic control systems in newer vehicles leads to an increased possibility of software bugs, the emergence of new types of security attacks, or infringement of intellectual property rights. The automotive industry faces new challenges to keeping software up-to-date, safe and secure.

To tackle such challenges, automakers have introduced or are preparing to introduce over-the-air (OTA) updating technology for efficient management of vehicle software. OTA updates will enable the secure and cost-effective deployment of emergency security patches, bug fixes, and feature updates over the lifespan of the vehicle.

However, due to the lack of a unified protocol or message format, the scope of the conventional OTA updates is limited to navigational map systems or entertainment systems.

### SUMMARY

The present disclosure in some embodiments seeks to provide a method and apparatus for more efficiently performing in-vehicle software updates wirelessly. In particular, the present disclosure seeks to provide a standardized procedure (or protocol) that can be used in wireless software update method and apparatus, and a standardized message format that can be used within the procedure.

In accordance with some embodiments, the present disclosure provides a method performed by an in-vehicle gateway that supports wireless software updates, including transmitting a first message to an update server, the first message comprising a list of software modules for electronic control units in the vehicle, and receiving a second message from the update server, the second message comprising information regarding a location on a network from which at least one update module corresponding to the list of the software modules can be downloaded and information indicating a constraint imposed on execution of the update modules. The constraint may define a safe operating state of the vehicle suitable for executing the update module.

The second message may include RXSWIN as a dedicated identifier of alphanumeric characters assigned to the update module. The RXSWIN includes a number 'X' indicating a UN regulation number applied to the update module. In addition, the second message may further include information indicative of an update type of the update module. The update type of the update module may be selected from among a plurality of available update types including a full update, a partial update, and a delta update.

In accordance with another embodiment, the present disclosure provides an in-vehicle gateway for supporting wireless software updates, including at least one processor and at least one memory configured to store commands. The commands cause, when executed on the at least one processor, the in-vehicle gateway to perform steps of transmitting a first message to an update server, the first message comprising a list of software modules for electronic control units in the vehicle, and receiving a second message from the update server, the second message comprising information regarding a location on a network from which at least one update module corresponding to the list of the software modules can be downloaded and information indicating a constraint imposed on execution of the update modules.

In accordance with yet another embodiment, the present disclosure provides a method implemented by an update server for supporting wireless software updates of a vehicle, including receiving a first message from an in-vehicle gateway, the first message comprising a list of software modules for electronic control units in the vehicle, and transmitting a second message to the in-vehicle gateway, the second message comprising information regarding a location on a network from which at least one update module corresponding to the list of the software modules can be downloaded and information indicating a constraint imposed on execution of the update modules.

In accordance with yet another embodiment, the present disclosure provides an update server for supporting wireless software updates of a vehicle, including at least one processor and at least one memory configured to store commands. The commands cause, when executed on the at least one processor, the update server to perform steps of receiving a first message from an in-vehicle gateway, the first message comprising a list of software modules for electronic control units in the vehicle; and transmitting a second message to the in-vehicle gateway, the second message comprising information regarding a location on a network from which at least one update module corresponding to the list of the software modules can be downloaded and information indicating a constraint imposed on execution of the update modules.

### BRIEF DESCRIPTION OF THE DRAWINGS

FIG. 1 is a diagram of an example configuration of a software update system according to at least one embodiment of the present disclosure.
FIG. 2 is a flowchart of a wireless software update procedure or protocol according to at least one embodiment of the present disclosure.
FIG. 3 is a diagram of an example structure of a diagnose submit message according to at least one embodiment of the present disclosure.
FIG. 4 is a diagram of an example XML coding of a diagnose submit message.
FIG. 5 is a diagram of an example structure of a diagnose receipt message according to at least one embodiment of the present disclosure.
FIG. 6 is a diagram of an example XML coding of a diagnose receipt message.
FIG. 7 is a diagram of an example structure of an update_check request message according to at least one embodiment of the present disclosure.
FIG. 8 is a diagram of an example XML coding of an update_check request message.
FIG. 9 is a diagram of an example structure of an update_check response message according to at least one embodiment of the present disclosure.
FIG. 10 is a diagram of an example XML coding of an update_check response message.
FIG. 11 is a schematic diagram of a full update, a partial update, and a delta update that is applicable to an electronic control unit (ECU).
FIG. 12 is a diagram of an example structure of an update_report submit message according to at least one embodiment of the present disclosure.
FIG. 13 is a diagram of an example XML coding of an update_report submit message.
FIG. 14 is a diagram of an example structure of an update_report receipt message according to at least one embodiment of the present disclosure.
FIG. 15 is a diagram of an example XML coding of an update_report receipt message.
FIG. 16 is a block diagram of an example configuration of a vehicle gateway device that can be used as a vehicle mobile gateway (VMG).

### DETAILED DESCRIPTION

Hereinafter, at least one embodiment of the present disclosure will be described in detail with reference to the accompanying drawings. In the following description, like reference numerals designate like elements, although the elements are shown in different drawings. Further, in the following description of the at least one embodiment, a detailed description of known functions and configurations incorporated herein will be omitted for the purpose of clarity and for brevity.

Additionally, various terms such as first, second, A, B, (a), (b), etc., are used solely for the purpose of differentiating one component from the other but not to imply or suggest the substances, the order or sequence of the components. Throughout this specification, when a part "includes" or "comprises" a component, the part is meant to further include other components, not excluding specifically unless specifically stated to the contrary.

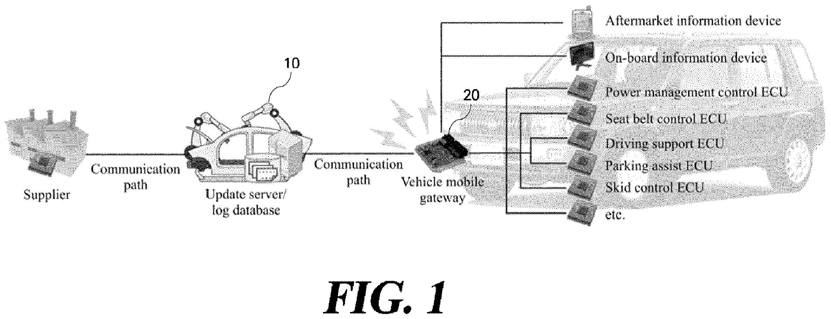

FIG. 1 is a diagram of an example configuration of a software update system according to at least one embodiment of the present disclosure.

The software update system illustrated in FIG. 1 manages software updates of various Electronic Control Units (ECUs) mounted on a vehicle. The software update system includes an update server 10 and a vehicle mobile gateway (VMG) 20 mounted on the vehicle. The VMG 20 may connect to the update server 10 via a wireless communication network. The wireless communication network may be configured, for example, of a cellular network, a wireless local area network (LAN), an internet network, or a combination of these. In addition, although only one vehicle is shown in FIG 1, it is obvious that a plurality of vehicles may be connected to the update server 10.

The update server 10 collects state information of the software module from the vehicles and distributes the software update module to the vehicles. The update server 10 may operate in conjunction with a log database that stores software state information of each vehicle to manage the software state of the vehicle. The update server 10 may be deployed by a supplier or a third party as well as an automobile manufacturer.

The VMG 20 is wirelessly connected to the update server 10 so that the vehicle can perform a software update. The VMG 20 may communicate with electronic control units via an in-vehicle network (e.g., CAN, LIN, MOST, etc.). The VMG 20 is actually a conceptual entity that may be implemented with several components. For example, a vehicle-mounted connection management entity (device so-called a central gateway, head unit, communication head unit or device gateway) may be used to perform at least part of the VMG.

A user interface (UI) is generally an in-vehicle onboard device or after-market information device with display and input means. Such an onboard device or information device may be connected to another device of the vehicle (e.g., VMG or ECUs) to obtain and display the vehicle's speed, revolutions per minute (RPM), fuel level, and the like. In particular, in the software update procedure of some embodiments of the present disclosure, the user interface can be used to inform the vehicle driver of the need for an update.

On the other hand, when the execution of the software update can affect the safety of the vehicle, constraints need to be added to the execution of the update, in order for the update to be executed safely.

For example, when an update may result in a safety risk while driving, the vehicle needs to be disabled from running during the update or the driver needs to be blocked from using the vehicle function(s) that may affect the safety of the vehicle or the successful execution of the update. In addition, it is necessary to ensure that the software update can only be executed when the vehicle has enough power to complete the update process (or enough power to guarantee the possibility of reverting to a previous version). When an additional action is required by the driver to complete the update process, the execution of the update is supposed to be prohibited while driving.

Unlike where software updates are performed by a skilled person, such as a mechanic at a garage, this OTA update scheme needs the update server to inform the vehicle VMG of the constraints imposed on the execution of the update.

The present disclosure in some embodiments defines the actual procedure for wireless software updating between the update server and the VMG and the format of their exchanged messages.

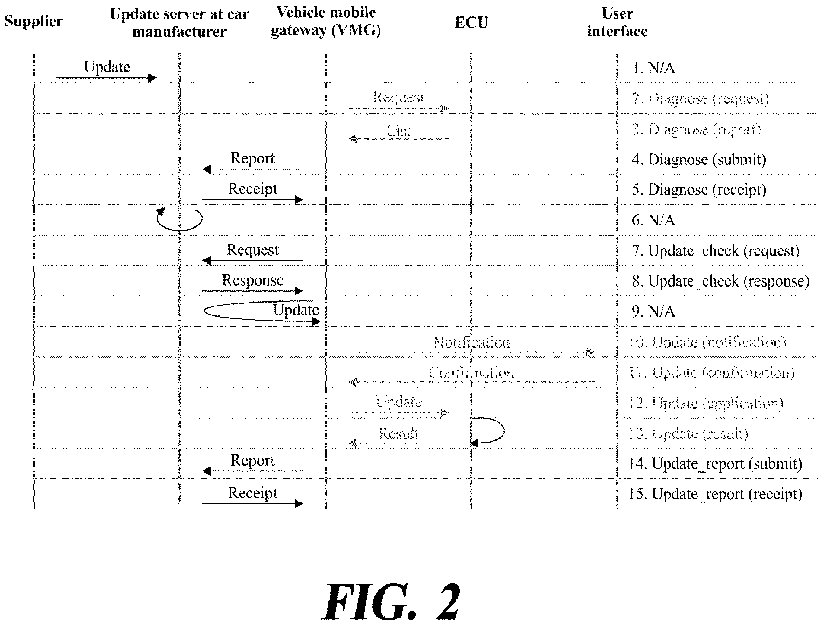

FIG. 2 is a flowchart of a wireless software update procedure or protocol according to at least one embodiment of the present disclosure.

Referring to FIG. 2, a software supplier first provides a software update (or an update package) to an update server (STEP 1). Here, the operating body of the software supplier and the update server may be a vehicle manufacturer, a manufacturer of a device mounted on a vehicle or a component included therein, or it may be a third party. In addition, this step does not necessarily have a specific ordinal relation to the following steps in execution.

The VMG sends a diagnostic request message to each of the electronic control units (ECUs) connected to it to submit a software list (STEP 2).

In response to the diagnostic request message, each ECU checks the software status, generates a software module list and sends it to the VMG via a diagnostic report message (STEP 3).

Accordingly, the VMG transmits the list obtained from each ECU through a diagnose submit message to the update server, to check whether there is software to update for the vehicle (STEP 4).

The update server transmits a diagnose receipt message to the VMG as an acknowledgment of the list submitted by the VMG (STEP 5).

According to the list, the update server examines the status of the software installed in the vehicle and determines the need for updating the ECUs (STEP 6).

This examination can take a long time, so the VMG sends an update_check request message to the update server periodically to confirm the need for updating the vehicle (STEP 7).

When there is an update, the update server sends the VMG an update_check response message that includes data, e.g., URLs from which the update module can be downloaded (STEP 8).

When there is an update, the VMG may access the relevant URL to download the update module (STEP 9).

The VMG may use the user interface to obtain permission from the driver to apply the update or may use the same just to inform the existence or application of the update prior to applying the update to each ECU (STEP 10). For this purpose, an update notification message may be used.

When the driver confirms and accepts the update application, an update confirm message is sent from the user interface to the VMG (STEP 11).

Upon acceptance of the driver, the VMG may send the update files to the corresponding ECUs and request to apply the update (STEP 12). For this purpose, an update application message may be used.

Accordingly, each ECU in receipt of the update module file applies the update and sends the application result to the VMG (STEP 13). For this purpose, an update result message may be used.

The VMG submits the update application result to the update server through an update_report submit message (STEP 14).

In response to the update_report submit message, the update server sends an update_report receipt message to the VMG (STEP 16).

In the above-illustrated protocol, "STEP 2, STEP 3, STEP 4," and "STEP 5" can be understood to constitute one session for diagnostic purposes, "STEP 7 and STEP 8" one session for update checks, and "STEP 14 and STEP 16" one session for the purpose of reporting updates. Messages used in one session have the same value in a session identifier (sessionid) field which will be described later. When the application of the update fails or a remaining update is found, the update server may repeat STEP 6 to STEP 14 until the update application succeeds. In this case, the messages to be used in the next session will be given a different session identifier than those of the messages used in the previous session for the same purpose.

The present disclosure in some embodiment seeks to provide a standardized format for messages sent and received between an update server and a vehicle (VMG) in a software update procedure or protocol. Thus, the following disclosure generally concentrates on the data format of the messages used in the steps of STEP 4, STEP 5, STEP 7, STEP 8, STEP 14, and STEP 16, respectively, in the procedure illustrated in FIG. 2.

Table 1 summarizes the message (sub)type, the sender, the receiver, and the intended use of the messages exchanged between the update server and the vehicle (VMG).

**[Table 1]**

| **Type** | **Subtype** | **From** | **To** | **Purpose** |
|---|---|---|---|---|
| diagnose | submit | VMG | Usvr | Report of results of ECUs in a vehicle |
| | receipt | Usvr | VMG | Receipt for submit of diagnose report |
| update_check | request | VMG | Usvr | Request of update module |
| | response | Usvr | VMG | Update module provided |
| update_report | submit | VMG | Usvr | Report of application of the update |
| | receipt | Usvr | VMG | Receipt of the report |

Referring to Table 1, the messages used in the illustrated update procedure may be classified into various types according to their purpose. For example, the messages may have one of the following types: diagnose, update_check, and update_report, which may be associated with the session in which the message is used. In one session, messages with two or more different subtypes may be used. In Table 1, "Usvr" described as a sender and receiver of a message indicates an update server.

Described now in detail is the structure and elements of the message used in each step between the update server and the vehicle (VMG). Messages exchanged between entities in each step may be used in combination with a well-known security technique such as digital signature schemes or message authentication code (MAC) schemes, to protect their integrity and authenticity.

The messages described below have in common a Message element, an IssuedTime element, and an ExpirationTime element. The Message element is a container that describes the basic information of the relevant message, the IssuedTime element is a container that describes the generation time of the relevant message, and the ExpirationTime element is a container that describes the expiration time of the message.

The Message element, which is its attribute fields, may have at least the fields shown in Table 2. However, not all the listed fields should be understood as essential.

**[Table 2]**

| **Element** | **Attribute in element** | **Description** |
|---|---|---|
| **Message** | - | Container of the message. |
| | protocol | Always "1.0". |
| | version | The version number of the message sender. |
| | type | Message type (always "diagnose"). |
| | subtype | Message subtype (always "submit"). |
| | sessionid | Session identifier (ID) is a random global user ID (GUID) assigned to the associated session. |
| | trustlevel | Trust level is determined based on the security capability and safety requirement of the device that generated this message. |
| | ownerid | Owner ID provided by a car manufacturer/supplier. |
| | messageid | Message ID is a random GUID associated with an individual message. |

The protocol field is for identifying the protocol in which the message is used. The version field indicates version information of the message sender. As described regarding Table 1, the type field may have one value of "Diagnose," "Update_check" and "Update_report," and the subtype field may have a value of "submit" and "receipt" or it may have one of "request" or "response". The sessionid field indicates a session identifier (session ID) which is a random Globally Unique Identifier (GUID) for the associated session in which the message is used. The trustlevel field indicates a trust level that is determined based on the security capability and safety requirements of the entity or device generating the relevant message. The ownerid field indicates the identifier of the vehicle owner provided by the vehicle manufacturer/supplier. The messageid field indicates an identifier of the message, which is set to a random GUID for an individual message.

### Diagnose submit message

After collecting diagnostic results from in-vehicle devices or ECUs (see STEP 2 and STEP 3 of FIG. 2), the VMG submits a list of software information to the update server (see STEP 4 of FIG. 2). For this purpose, a diagnose submit message may be used.

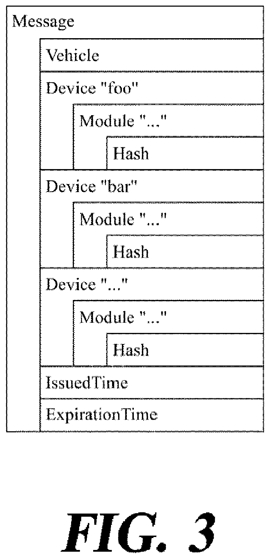

FIG. 3 is a diagram of an example structure of a diagnose submit message according to at least one embodiment of the present disclosure.

Referring to FIG. 3, the diagnose submit message may further include a Vehicle element and at least one Device element, in addition to the above-described basic elements. i.e., a Message element, an IssuedTime element, and an ExpirationTime element. The Device element may include at least one Module element as its child element, and each Module element may include a Hash element as its child element.

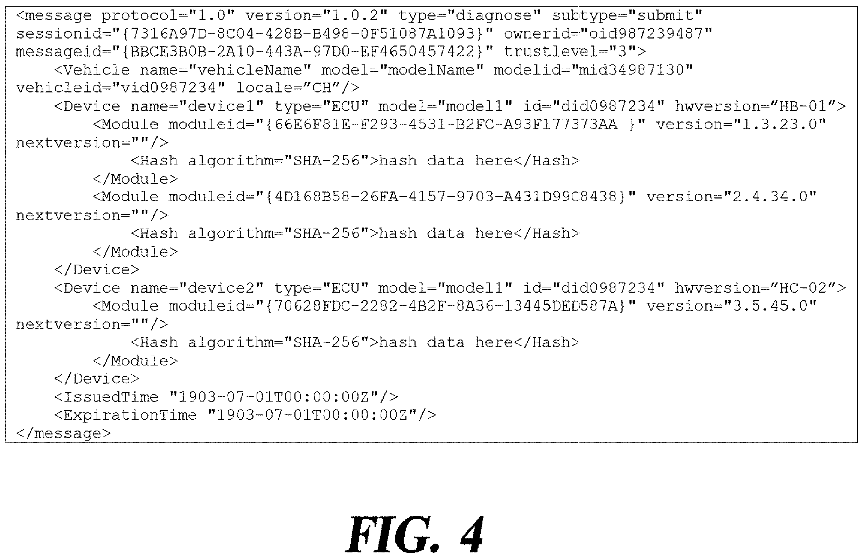

Table 3 shows an exemplary format of each element included in the diagnose submit message. FIG. 4 shows an example XML coding of a diagnose submit message.

**[Table 3]**

| **Element** | **Attribute in element** | **Description** |
|---|---|---|
| **Message** | - | Container of the message. |
| | protocol | Always "1.0". |
| | version | The version number of the message sender. |
| | type | Message type (always "diagnose"). |
| | subtype | Message subtype (always "submit"). |
| | sessionid | Session identifier (ID) is a random global user ID (GUID) associated with the diagnose session. An identical session ID is applied to a set of diagnose request, report, submit and receipt messages. |
| | trustlevel | Trust level is determined based on the security capability and safety requirement of the device that generated this message. |
| | ownerid | Owner ID provided by a car manufacturer/supplier. |
| | messageid | Message ID is a random GUID associated with an individual message. |
| **Vehicle** | - | Container of vehicle information. It contains multiple module elements. |
| | name | Name of the vehicle, if any. |
| | model | Model name of the vehicle provided by the car manufacturer. |
| | modelid | Model name of the vehicle. |
| | vehicleid | Vehicle ID defined by a car manufacturer/supplier. |
| | locale | Locale information of the vehicle. |
| **Device** | - | Container of device information. It contains multiple module elements. |
| | name | Name of the device, if any. |
| | type | Type name of the device, such as "Power management ECU," "Seat belt control ECU," etc. |
| | model | Model name of the device. |
| | deviceid | Device ID defined by a car manufacturer/supplier. |
| | hwversion | Version of this hardware module. |
| **Module** | - | Container of module information, which contains a hash element. |
| | moduleid | Module ID is a unique ID provided by a car manufacturer/ supplier. |
| | version | Version of this software module. |
| | nextversion | The version of the module update in progress, which is mainly used for sending a response message during an update. |
| **Hash** | - | Hash is a container of a hash value and information of its hash algorithm. |
| | algorithm | Algorithm of the hash function (e.g., SHA-3, SHA-256, etc.). |
| **IssuedTime** | - | Time of generation of this message. |
| **ExpirationTime** | - | Expiration time of this message. |

As shown in Table 3, for the diagnose submit message, the type field of the Message element is set to "diagnose" and the subtype field is set to "submit".

The Vehicle element is a container for describing basic information about a vehicle, and may have a plurality of attribute fields as follows: a (name) field indicating a vehicle name; a (model) field indicating a model name of a vehicle given by the vehicle manufacturer; a (modelid) field indicating a model identifier of the vehicle; a (vehicleid) field indicating a vehicle identifier defined by the vehicle manufacturer/supplier; and a (locale) field indicating information (at the country/region level or geographical location level) that can identify the area of production or shipment of the vehicle.

The Device element is a container for describing information about a device mounted on a vehicle, and may have a plurality of attribute fields as follows: a (name) field indicating a device name; a (type) field indicating the type of device (e.g., "Power management ECU," "Seat belt control ECU," etc.); a (model) field indicating a model name of the device; a (deviceid) field indicating a device identifier defined by the vehicle manufacturer/supplier; and a (hwversion) field indicating the version of the hardware module of the device. Herein, a device mounted in a vehicle may be understood as an electronic control unit (ECU) itself or an electronic control system composed of one or more ECUs.

The Module element is a container that describes information about the software module currently installed in the associated device, and may have a plurality of attribute fields as follows: a (moduleid) field indicating a unique identifier of the software module, defined by the vehicle manufacturer or module supplier; a (version) field indicating a version of the relevant software module; and a (nextversion) field indicating a next version of the relevant software module (i.e., a version of a software module to be installed through this update procedure).

The various information described by the Vehicle element, at least one Device element, and the at least one Module element included in the diagnose submit message may be used by the update server to analyze the state of software installed in the vehicle, to determine whether a software update is required for the ECUs in the relevant vehicle, and to determine the possible update types among others.

### Diagnose receipt message

Upon receiving a diagnose submit message containing a list of vehicle software information (see S4 of FIG. 2), the update server sends a diagnose receipt message to the VMG (see S5 of FIG. 2). Through this action, the vehicle VMG can recognize that the submission of the software information of the vehicle has been successfully completed, so that the vehicle update procedure can proceed to the next step (i.e., update check). The update server may send a message of this fact to the VMG prior to or upon checking for possible updates for each software module.

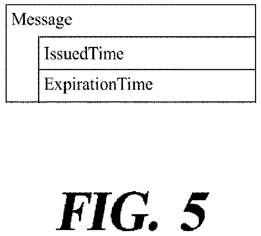

FIG. 5 is a diagram of an example structure of a diagnose receipt message according to at least one embodiment of the present disclosure. As shown in FIG. 5, the diagnose receipt message may be composed of the aforementioned basic elements (i.e., a Message element, an IssuedTime element, and an ExpirationTime element).

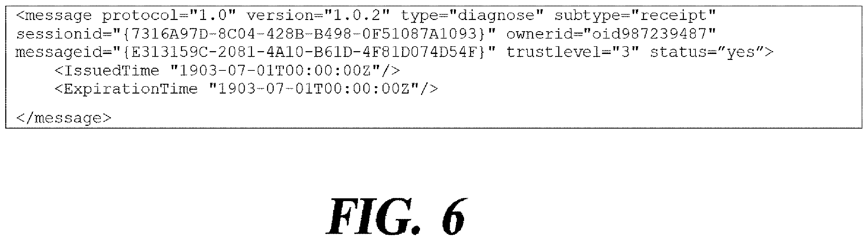

Table 4 shows an exemplary format of each element included in the diagnose receipt message. FIG. 6 shows an example XML coding of a diagnose receipt message.

**[Table 4]**

| **Element** | Attribute in element | Description |
|---|---|---|
| **Message** | - | Container of the message. |
| | protocol | Always "1.0". |
| | version | The version number of the message sender. |
| | type | Message type (always "diagnose"). |
| | subtype | Message subtype (always "receipt"). |
| | sessionid | Session ID is a random GUID associated with the diagnose session. An identical session ID is applied to a set of diagnose request, report, submit and receipt messages. |
| | trustlevel | Trust level is determined based on the security capability and safety requirement of the device that generated this message. |
| | ownerid | Owner ID provided by a car manufacturer/supplier. |
| | messageid | Message ID is a random GUID associated with an individual message. |
| | status | Acknowledgement of report for diagnose (submit) |
| **IssuedTime** | - | Time of generation of this message. |
| **Expiration Time** | - | Expiration time of this message. |

As shown in Table 4, for the diagnose receipt message, the type field of the Message element is set to "diagnose" and the subtype field is set to "receipt". The Message element further includes, in addition to the common attribute fields described above, a (state) field indicating whether the diagnose submit message has been successfully received.

### update_check request message

According to the hardware and software information list included in the diagnose submit message, the update server analyzes the status of the software installed in the vehicle and determines whether a software update is required for the devices, i.e., ECUs. Once the software information is uploaded in the diagnose submit message, the update server starts the analysis to determine the update module required for the vehicle. Such an analysis can take considerable time. Update_check request messages are used periodically to inquire about the update decision by the update server.

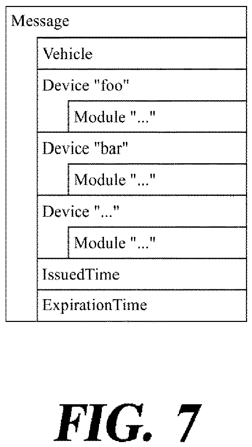

FIG. 7 is a diagram of an example structure of an update_check request message according to at least one embodiment of the present disclosure. As shown in FIG. 7, the structure of the update_check request message is almost the same as that of the diagnose submit message illustrated in FIG. 3 described above but without the child element (i.e., Hash element) of each Module element.

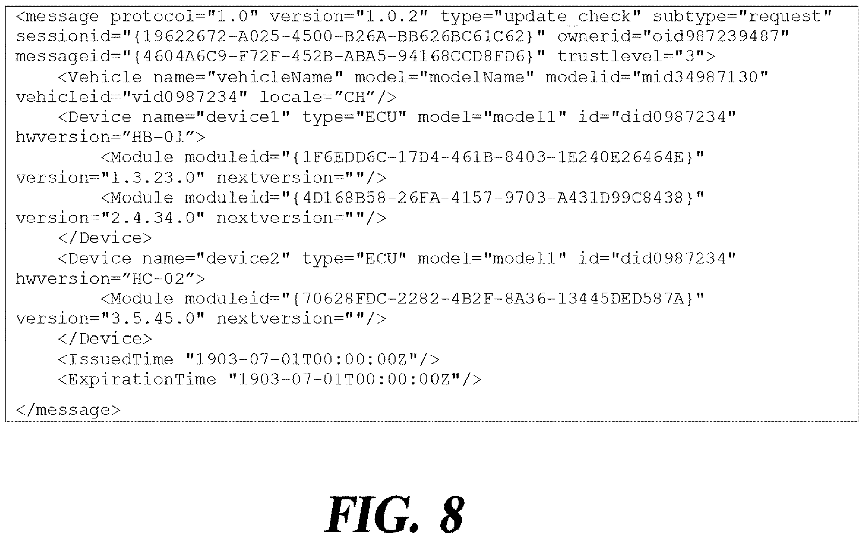

Table 5 shows exemplary formats of the respective elements included in the update_check request message. FIG. 8 shows an example XML coding of an update_check request message.

**[Table 5]**

| **Element** | **Attribute in element** | **Description** |
|---|---|---|
| **Message** | - | Container of the message. |
| | protocol | Always "1.0". |
| | version | The version number of the message sender. |
| | type | Message type (always "update_check"). |
| | subtype | Message subtype (always "request"). |
| | sessionid | Session ID is a random GUID associated with the update_check session. An identical session ID is applied to a set of update check request and response messages. |
| | trustlevel | Trust level is determined based on the security capability and safety requirement of the device that generated this message. |
| | ownerid | Owner ID is provided by a car manufacturer/supplier. |
| | messageid | Message ID is a random GUID associated with an individual message. |
| **Vehicle** | - | Container of vehicle information. It contains multiple module elements. |
| | name | Name of the vehicle, if any. |
| | model | Model name of the vehicle provided by the car manufacturer. |
| | modelid | Model name of the vehicle. |
| | vehicleid | Vehicle ID defined by a car manufacturer/supplier. |
| | locale | Locale information of the vehicle. |
| **Device** | - | Container of device information. It contains multiple module elements. |
| | name | Name of the device, if any. |
| | type | Type name of the device, such as "Power management ECU," "Seat belt control ECU," etc. |
| | model | Model name of the device. |
| | deviceid | Device ID defined by a car manufacturer/supplier. |
| | hwversion | Version of this hardware module. |
| **Module** | - | Container of module information, which contains a hash element. |
| | moduleid | Module ID is a unique ID provided by a car manufacturer/ supplier. |
| | version | Version of this software module. |
| | nextversion | The version of the module update in progress, which is mainly used for sending a response message during an update. |
| **IssuedTime** | - | Time of generation of this message. |
| **ExpirationTime** | - | Expiration time of this message. |

As shown in Table 5, for the update_check request message, the type field of the Message element is set to "update_check" and the subtype field is set to "request". In addition, the sessionid field of the Message element is set to an identifier of an update check session in which the relevant message is used, and the same value is applied to both an update_check request message and an update confirmation response message corresponding to an update check session.

### update_check response message

In response to the update_check request message, the update server replies with findings on request to the vehicle VMG via the update_check response message. When there is an update required for the software module(s) of the vehicle, the update_check response message includes information on the location (e.g., Uniform Resource Locator or URL) on the network from which the update files can be obtained.

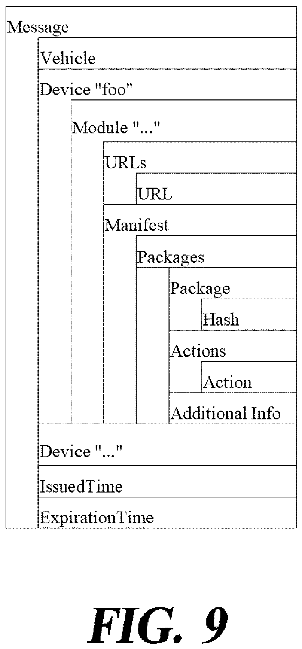

FIG. 9 is a diagram of an example structure of an update_check response message according to at least one embodiment of the present disclosure. As shown in FIG. 9, the basic structure of the update_check response message is similar to that of the update_check request message shown in FIG. 7, but with a URLs element and a Manifest element added as child elements of the Module element.

As shown in FIG. 9, the update_check response message may further include a Vehicle element and at least one Device element, in addition to basic elements, i.e., a Message element, an IssuedTime element, and an ExpirationTime element. The Device element may have at least one Module element as its child element, and each Module element may have a Hash element as its child element. In other words, the basic structure of the update_check response message is similar to that of the update_check request message, but with URLs and Manifest elements added as child elements of the Module element.

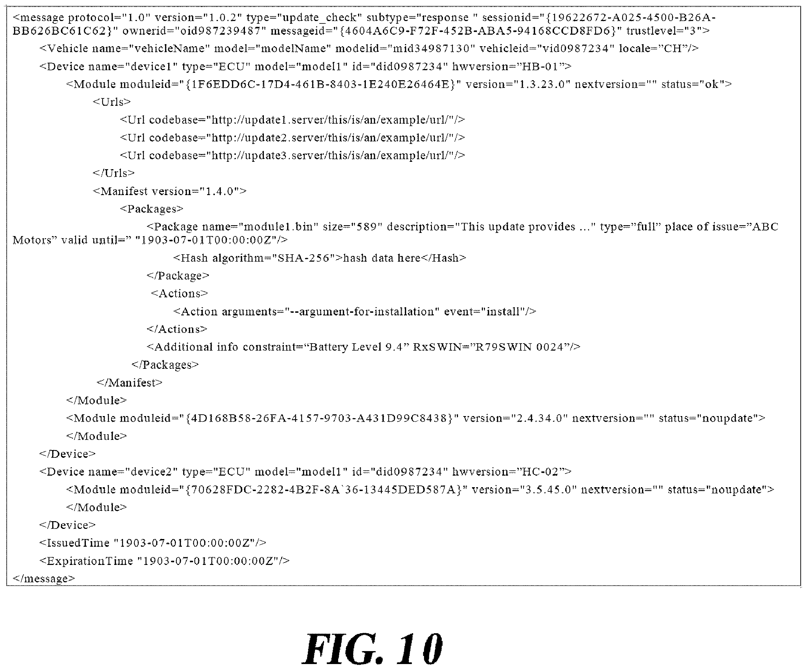

Table 6 shows an exemplary format of each of the elements included in the update_check response message. FIG. 10 shows an example XML coding of an update_check response message.

**[Table 6]**

| **Element** | **Attribute in element** | **Description** |
|---|---|---|
| **Message** | - | Container of the message. |
| | protocol | Always "1.0". |
| | version | The version number of the message sender. |
| | type | Message type (always "update_check"). |
| | subtype | Message subtype (always "request"). |
| | sessionid | Session ID is a random GUID associated with the update check session. An identical session ID is applied to a set of update_check request and response messages. |
| | trustlevel | Trust level is determined based on the security capability and safety requirement of the device that generated this message. |
| | ownerid | Owner ID is provided by a car manufacturer/supplier. |
| | messageid | Message ID is a random GUID associated with an individual message. |
| **Vehicle** | - | Container of vehicle information. It contains multiple module elements. |
| | name | Name of the vehicle, if any. |
| | model | Model name of the vehicle provided by the car manufacturer. |
| | modelid | Model name of the vehicle. |
| | vehicleid | Vehicle ID defined by a car manufacturer/supplier. |
| | locale | Locale information of the vehicle. Device |
| **Device** | - | Container of device information. It contains multiple module elements. |
| | name | Name of the device, if any. |
| | type | Type name of the device, such as "Power management ECU," "Seat belt control ECU," etc. |
| | model | Model name of the device. |
| | deviceid | Device ID defined by a car manufacturer/supplier. |
| | hwversion | Version of this hardware module. |
| **Module** | - | Container of module information, which contains a hash element. |
| | moduleid | Module ID is a unique ID provided by a car manufacturer/ supplier. |
| | version | Version of this software module. |
| | status | Status of the inspection of update. "noupdate" is set if there are no updates, while "ok" is set if there are any updates for this module. |
| | nextversion | The version of the module update in progress, which is mainly used for sending a response message during an update. |
| **ULSs** | - | Container of URL elements if there are any updates. This element is contained in a module element when the status is ok. |
| **URL** | - | URL of update file. The URL element should be listed at least two times for the backup of the first URL (server). The maximum number of URL elements should be carefully determined taking the computational resource of VMG into account. |
| | codebase | Location of the update file |
| **Manifest** | - | Describes the module needed to be installed, and the actions needed to be taken with those files. |
| | version | Specific newer version number of this software module. |
| **Packages** | - | A set of files needed to be installed. Contains no attribution. Contains one or more package child elements. |
| **Package** | - | A single file to be installed for the module. |
| | name | Describes the filename of the update module. |
| | size | Contains the size in bytes of the update module. |
| | description | Description of update module. |
| | type | **Type of update package (e.g., full, partial, delta)** |
| | place of issue | **Place of issue of the package** |
| | valid until | **Validation time of the package** |
| **Hash** | - | Container of a hash value and information of its hash algorithm. |
| | algorithm | Algorithm of the hash function (e.g., SHA-3, SHA-256, etc.). |
| **Actions** | - | Actions to be performed to install the module once all required files in the packages element have been successfully downloaded. |
| **Action** | - | A single action to perform as part of the install process. |
| | event | A fixed string denoting when this action should be run. One of "preinstall," "install," "postinstall" and "update". |
| | arguments | Arguments to be passed to the installation process. |
| **Additional Info** | - | **Additional information for update package.** |
| | constraint | **Constraints for update of package, (e.g., vehicle status, battery level, etc.).** |
| | RxSWIN | **Unique for each specific UN Regulation wherein the "x" refers to the number of the Regulation to which it is applied** |
| **IssuedTime** | - | Time of generation of this message. ExpirationTime |
| **ExpirationTime** | - | Expiration time of this message. |

As shown in Table 6, for the update_check response message, the type field of the Message element is set to "update_check" and the subtype field is set to "response".

The Module element has a status field, and the status field may be set to "noupdate" when there is no update found for the corresponding software module, and "ok" when there is an update.

On the other hand, when there is an update to the software module specified by the Module element, that is when the status field of the Module element is set to "ok," the URLs element is included as a child element of the Module element. The URLs element is a container for the URLs of the relevant update. The physical address is included in the URL element having a codebase field, which is a child element of the URLs element. Where there is a backup server(s), two or more URL elements may be used.

The Manifest element is a container that describes basic information about the software module (files) to be installed and an action to be performed on the files. The manifest element has a version field indicating a new version number of the corresponding software module. The Manifest element contains, as its child elements, packages element that describes information about the set of files to be installed, and the Pakages element contains, as its child elements, Package and Actions elements for each file.

The Package element represents information about a single file to be installed for the relevant module. The Package element has a Hash element as its child element. The Package element has, as its attribute field, a (name) field indicating a file name, a (size) field indicating a file size in bytes, and a (description) field indicating a description of the relevant file (e.g., "This update provides ..."). In addition, the Package element may have a (type) field indicating a package update type, e.g., a full update, a partial update, a delta update, etc., a (place of issue) field indicating a place of issue of the package, and a (valid until) field indicating a valid period of the package.

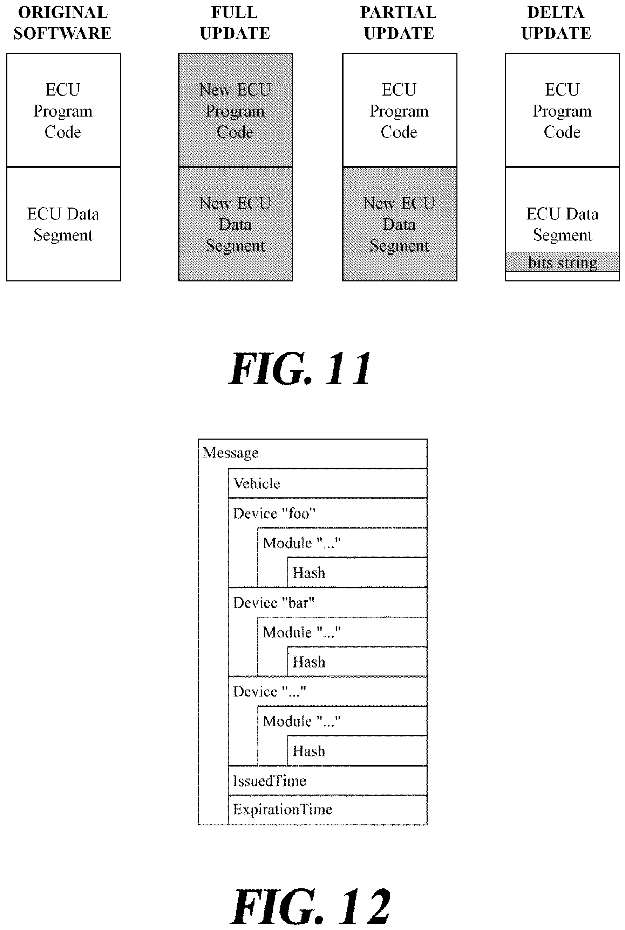

FIG. 11 is a schematic diagram of a full update, a partial update, and a delta update that is applicable to an electronic control unit (ECU). The full update or complete update is one that completely changes one or more of the original software, the partial update is one that only changes the affected blocks of the original software, and the delta update is one that only changes the affected bits or bytes (i.e., deltas) of the original software.

Referring back to FIG 10, the Actions element is the container for information about the actions to be performed to install the module when all required files defined in the packages element have been successfully downloaded, and it includes at least one action element as its child element. The action element is a container for a single action that is performed as part of the installation process. The Action element has an event field that indicates one of four preset actions of "preinstall," "install," "postinstall," and "update," and an arguments field that indicates the argument to be passed to the installation process.

The Additional Info element is a container for describing additional information about the update package(s) and has, as its attribute field, a constraint field describing constraints on the execution of the update package(s), e.g., the condition on vehicle status, battery level, vehicle function(s) unavailable, etc.

As mentioned above, in order for the software update to be executed safely for when the execution of the update can affect the safety of the vehicle, constraints need to be added to the execution of the update. According to some embodiments of the present disclosure, the update server uses an update_check response message that includes information indicating the constraints imposed on the execution of the software update together with information on the URL(s) from which the software update can be downloaded.

The VMG obtains the constraint(s) on the execution of the update package(s) from the update_check response message, and it may provide the constraint to the user through the user interface prior to the execution of the update package or may use the constraint at the update execution stage. As an example, before executing the update package, the VMG may determine whether an operational state of the vehicle satisfies the constraint and accordingly determine whether to execute the update package. In addition, the VMG may send control commands to one or more electronic control systems prior to the execution of the update package, to meet the constraints (e.g., to deactivate the vehicle's function(s)).

Such constraints may define a safe operating state of the vehicle (e.g., parking mode, sufficient battery power, etc.) suitable for executing the update. One example constraint may be that the vehicle cannot run while the update is being executed, or that the driver cannot use the vehicle function(s) that may affect the safety of the vehicle or the successful execution of the update. In addition, another example constraint may be that the software update can only be executed when the vehicle has sufficient power to complete the update process or sufficient power to ensure the likelihood of restoration to a previous version. Furthermore, yet another example constraint may be that execution of the update is not allowed while driving, when additional action is required by the driver to complete the update process.

In addition, the Additional Info element may further include an RxSWIN field.

RXSWIN (RX Software Identification Number) is a dedicated identifier with alphanumeric characters, defined by the vehicle manufacturer, where X refers to the UN regulation No. 'X' as applied to the update module. UNECE/WP.29 defines RXSWIN as follows:

"RX Software Identification Number (RXSWIN) means a dedicated identifier, defined by the vehicle manufacturer, representing information about the type approval relevant software of the Electronic Control System contributing to the Regulation N° X type approval relevant characteristics of the vehicle."

In addition, when the update of the software module is successfully performed, the VMG may store the RXSWIN obtained from the update_check response message in the VMG itself or in another electronic control system (e.g., an electronic control system to which the corresponding software module is applied), so that the RXSWIN can be read from outside the vehicle later through an OBD port, or the like, and that it can be protected from unauthorized modifications.

In this way, the update server uses an update_check response message including RXSWIN assigned to the relevant software update together with information on the URL(s) from which the software update can be downloaded.

### update_report submit message

The VMG utilizes the update_report submit message to submit the update application results to the update server. Through the update_report submit message, the update server can identify and manage the software update status of each device (ECU) in the vehicle.

FIG. 12 is a diagram of an example structure of an update_report submit message according to at least one embodiment of the present disclosure. As shown in FIG. 12, the structure of the update_report submit message is substantially the same as that of the diagnose submit message illustrated in FIG. 3 described above.

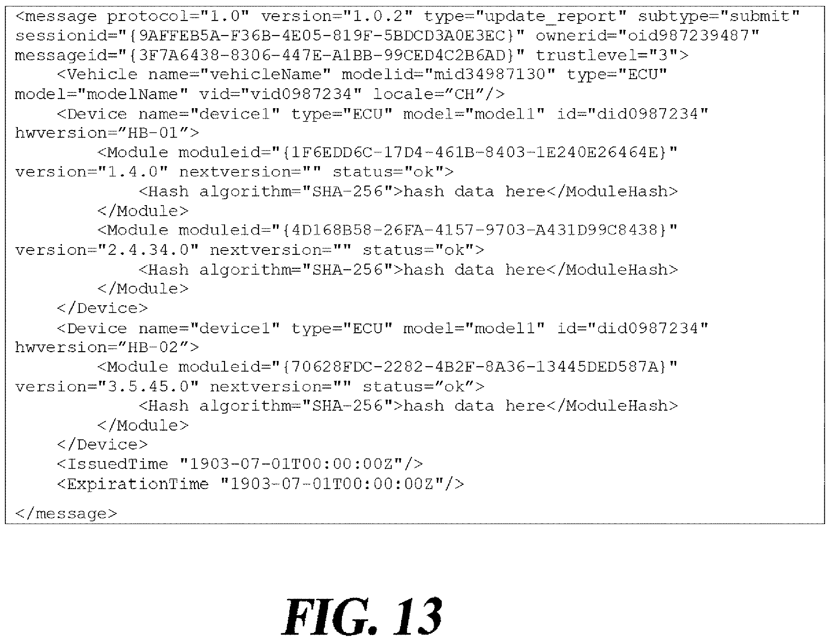

Table 7 shows an exemplary format of each of the elements included in the update_report submit message. FIG. 13 shows an example XML coding of an update_report submit message.

**[Table 7]**

| **Element** | **Attribute in element** | **Description** |
|---|---|---|
| **Message** | - | Container of the message. |
| | protocol | Always "1.0". |
| | version | The version number of the message sender. |
| | type | Message type (always "update_report"). |
| | subtype | Message subtype (always "submit"). |
| | sessionid | Session ID is a random GUID associated with the update _report session. An identical session ID is applied to a set of update_report submit and receipt messages. |
| | trustlevel | Trust level is determined based on the security capability and safety requirement of device that generated this message. |
| | ownerid | Owner ID provided bv a car manufacturer/supplier. |
| | messageid | Message ID is a random GUID associated with an individual message. |
| **Vehicle** | - | Container of vehicle information. It contains multiple module elements. |
| | name | Name of the vehicle, if any. |
| | model | Model name of the vehicle provided by the car manufacturer. |
| | modelid | Model name of the vehicle. |
| | vehicleid | Vehicle ID defined by a car manufacturer/supplier. |
| | locale | Locale information of the vehicle |
| **Device** | | Container of device information. It contains multiple module elements. |
| | name | Name of the device, if any. |
| | type | Type name of the device, such as "Power management ECU," "Seat belt control ECU," etc. |
| | model | Model name of the device. |
| | deviceid | Device ID defined by a car manufacturer/supplier. |
| | hwversion | Version of this hardware module. |
| **Module** | - | Container of module information, which contains a hash element. |
| | moduleid | Module ID is a unique ID provided by a car manufacturer/a supplier. |
| | version | Version of this software module. |
| | nextversion | The version of the module update in progress, which is mainly used for sending a response message during an update. |
| | status | Result of the application of this module. |
| **Hash** | - | Hash is a container of a hash value and information of its hash algorithm. |
| | algorithm | Algorithm of the hash function (e.g., SHA-3, SHA-256, etc.). |
| **IssuedTime** | - | Time of generation of this message. |
| **Expiration Time** | - | Expiration time of this message. |

As shown in Table 7, for the update_report submit message, the type field of the Message element is set to "update_report," and the subtype field is set to "submit".

The Module element of the update_report submit message has a status field in addition to the basic attribute fields, and this field may be used to indicate the update application result of the module.

### update_report receipt message

The update server sends an update_report receipt message to the VMG in response to the update_report submit message. By receiving this message, the VMG may recognize the end of the entire update procedure.

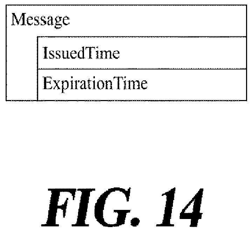

FIG. 14 is a diagram of an example structure of an update_report receipt message according to at least one embodiment of the present disclosure. As shown in FIG. 14, the update_report receipt message may be composed of the aforementioned basic elements (i.e., a Message element, an IssuedTime element, and an ExpirationTime element) in the same structure as that of the diagnose receipt message shown in FIG. 5.

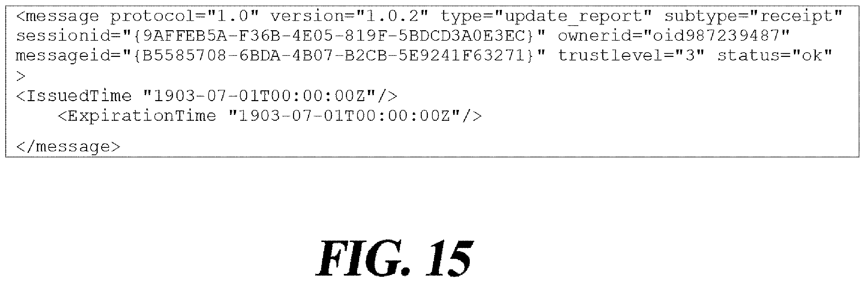

Table 8 shows exemplary formats of the respective elements included in the update_report receipt message. FIG. 15 shows an example XML coding of an update_report receipt message.

**[Table 8]**

| **Element** | **Attribute in element** | **Description** |
|---|---|---|
| **Message** | - | Container of the message. |
| | protocol | Always "1.0". |
| | version | The version number of the message sender. |
| | type | Message type (always "update _report"). |
| | subtype | Message subtype (always "receipt"). |
| | sessionid | Session ID is a random GUID associated with the update _report session. An identical session ID is applied to a set of update _report submit and receipt messages. |
| | trustlevel | Trust level is determined based on the security capability and safety requirement of the device that generated this message. |
| | ownerid | Owner ID provided by a car manufacturer/supplier. |
| | messageid | Message ID is a random GUID associated with an individual message. |
| | status | Acknowledgement for update_report (receipt) |
| **IssuedTime** | - | Time of generation of this message. |
| **Expiration Time** | - | Expiration time of this message. |

As shown in Table 8, for the update_report receipt message, the type field of the Message element is set to "update_report," and the subtype field is set to "receipt". The Message element has a status field, and this field may indicate whether a report acknowledgement (ACK) of the corresponding module has been made.

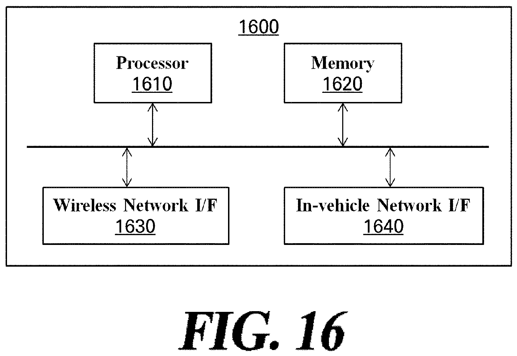

FIG. 16 is a block diagram of an example configuration of a vehicle gateway device that can be used as a VMG.

The illustrated vehicle gateway device 1600 includes at least one processor 1610, at least one memory 1620, a wireless network interface 1630, and an in-vehicle network interface 1640.

The processor 1610 executes instructions and controls other components in the vehicle gateway device 1600 while simultaneously instructing, among other tasks, data transmission and reception to and from other ECUs connected to the in-vehicle network or an update server connected via a wireless network by operating the vehicle gateway device 1600.

The memory 1620 includes volatile memory and non-volatile memory. The non-volatile memory stores control information for operating the vehicle gateway device 1600, such as commands and necessary parameters. The volatile memory temporarily stores some of the commands, data necessary for the operation of the commands, and the like.

The wireless network interface 1630 transmits and receives data to and from the update server through a wireless network according to instructions of the processor 1610.

The in-vehicle network interface 1640 transmits and receives data to and from the ECUs linked to the in-vehicle network, via the in-vehicle network, at the instruction of the processor 1610.

In particular, the processor 1610 may perform a controller function for performing the above-described software update procedure, a function of generating and interpreting messages, authentication and encryption function, and the like.

For example, the processor 1610 may obtain information on the URL for downloading the software update from the update_check response message received from the update server and download the software update from the obtained URL.

In addition, the processor 1610 obtains the constraint(s) on the execution of the update package(s) from the update_check response message received from the update server, and it may provide the constraint to the user through the user interface prior to the execution of the update package or may use the constraint at the update execution stage. As an example, before executing the update package, the processor 1610 may determine whether an operational state of the vehicle satisfies the constraints and accordingly determine whether to execute the update package. In addition, the processor 1610 may send control commands to one or more ECUs prior to the execution of the update package, to satisfy the constraints (e.g., to deactivate the vehicle's function(s)).

In addition, the processor 1610 may obtain information regarding an update type (e.g., full update, partial update, delta update, etc.) of the update package from the update_check response message received from the update server, and it may provide the target ECU with an indicator indicating the update type together with the downloaded update package, so that the target ECU is able to perform updates in a corresponding manner to the update type.

In addition, when the update of the software module is successfully performed, the processor 1610 may store the RXSWIN obtained from the update_check response message in the memory 1620 (in particular, non-volatile memory) or in another electronic control system (e.g., an electronic control system to which the corresponding software module is applied), so that the RXSWIN can be read from outside the vehicle later through an OBD port, or the like, and that it can be protected from unauthorized modification.

On the other hand, the update server described in the present disclosure and the methods performed by the same may be implemented by a general-purpose computer system having a processor, memory, disk or other mass storage, communication interface, input/output (I/O) devices, and other peripheral devices. A general-purpose computer system may serve as an update server that performs the methods described above by loading software instructions into the processor and then executing the instructions to perform the functions described in this disclosure.

It should be understood that the exemplary embodiments described above can be implemented in many different ways. The methods described in this disclosure may be implemented with instructions stored on non-transitory recording media, which can be read and executed by one or more processors. Non-transitory recording media include all types of recording devices, for example, in which data is stored in a form readable by a computer system. For example, non-transitory recording media include storage media such as erasable programmable read-only memory (EPROM), flash drives, optical drives, magnetic hard drives, solid-state drives (SSD).

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. One of ordinary skill would understand the scope of the claimed invention is not to be limited by the above explicitly described embodiments but by the claims and equivalents thereof.

## Claims

1. A method performed by an in-vehicle gateway that supports wireless software updates of a vehicle, the method comprising:
transmitting a first message to an update server, the first message comprising a list of software modules for electronic control units in the vehicle; and
receiving a second message from the update server, the second message comprising information regarding a location on a network from which at least one update module corresponding to the list of the software modules can be downloaded, and information indicating a constraint imposed on execution of the update modules.

2. The method of claim 1, wherein the constraint defines a safe operating state of the vehicle suitable for executing the update module.

3. The method of claim 2, further comprising:
prior to the execution of the update module, firstly determining whether an operation state of the vehicle satisfies the constraint; and
secondly determining whether to execute the update module according to the firstly determining.

4. The method of claim 2, further comprising:
prior to the execution of the update module, transmitting a control command to one or more electronic control systems in the vehicle such that an operating state of the vehicle satisfies the constraint.

5. The method of claim 1, further comprising:
prior to the execution of the update module, providing the constraint to a user of the vehicle.

6. The method of claim 1, wherein the constraint includes disabling the vehicle from moving during the execution of the update module or restricting the driver from using a vehicle function which possibly affects safety of the vehicle or successful execution of the update module.

7. The method of claim 1, wherein the constraint includes permitting the execution of the update module only if the vehicle has sufficient power to complete installation of the update module or only if the vehicle has sufficient power to ensure a likelihood of restoration to a previous version.

8. The method of claim 1, wherein the second message comprises:
RXSWIN as a dedicated identifier of alphanumeric characters assigned to the update module, the RXSWIN comprising a number indicating a UN regulation number applied to the update module.

9. The method of claim 8, further comprising:
securely storing the RXSWIN obtained from the second message in the vehicle so that the RXSWIN can be read from outside the vehicle and protected from unauthorized modifications.

10. The method of claim 1, wherein the second message further comprises:
information indicative of an update type of the update module, the update type being selected from among a plurality of available update types including a full update, a partial update, and a delta update.

11. An in-vehicle gateway for supporting wireless software updates, the in-vehicle gateway comprising:
at least one processor; and
at least one memory configured to store commands, wherein the commands, when executed on the at least one processor, cause the in-vehicle gateway to perform steps of:
transmitting a first message to an update server, the first message comprising a list of software modules for electronic control units in the vehicle; and
receiving a second message from the update server, the second message comprising information regarding a location on a network from which at least one update module corresponding to the list of the software modules can be downloaded and information indicating a constraint imposed on execution of the update modules.

12. The in-vehicle gateway of claim 11, wherein the second message comprises:
RXSWIN as a dedicated identifier of alphanumeric characters assigned to the update module, the RXSWIN comprising a number indicating a UN regulation number applied to the update module.

13. The in-vehicle gateway of claim 11, wherein the second message further comprises:
information indicative of an update type of the update module, the update type of the update module being selected from among a plurality of available update types including a full update, a partial update, and a delta update.

14. A method implemented by an update server for supporting wireless software updates of a vehicle, the method comprising:
receiving a first message from an in-vehicle gateway, the first message comprising a list of software modules for electronic control units in the vehicle; and
transmitting a second message to the in-vehicle gateway, the second message comprising information regarding a location on a network from which at least one update module corresponding to the list of the software modules can be downloaded and information indicating a constraint imposed on execution of the update modules.

15. An update server for supporting wireless software updates of a vehicle, the update server comprising:
at least one processor; and
at least one memory configured to store commands,
wherein the commands, when executed on the at least one processor, cause the update server to perform steps of:
receiving a first message from an in-vehicle gateway, the first message comprising a list of software modules for electronic control units in the vehicle; and
transmitting a second message to the in-vehicle gateway, the second message comprising information regarding a location on a network from which at least one update module corresponding to the list of the software modules can be downloaded and information indicating a constraint imposed on execution of the update modules.
